# EUROPEAN PATENT SPECIFICATION

(11) **EP 1 905 489 B1**
(45) Date of publication and mention of the grant of the patent: **18.12.2013**
(21) Application number: 06781232.1
(22) Date of filing: 19.07.2006
(51) Int. Cl.: A63B 65/02, A63F 13/00, A63F 13/04, F41J 3/00, F41J 5/04, F41J 5/052, F41J 5/14

(54) **GAME DEVICE, GAME SYSTEM AND GAME PROGRAM**
SPIELVORRICHTUNG, SPIELSYSTEM UND SPIELPROGRAMM
DISPOSITIF DE JEU, SYSTÈME DE JEU ET PROGRAMME DE JEU

(30) Priority: 20.07.2005 JP 2005209528
(43) Date of publication of application: 02.04.2008
(73) Proprietor: KABUSHIKI KAISHA SEGA doing business as SEGA CORPORATION, Ohta-ku Tokyo 144-8531 (JP); KABUSHIKI KAISHA DARTSLIVE doing business as DARTSLIVE Co., Ltd., Shibuya-ku Tokyo (JP)
(72) Inventor: NODA, Masataka, c/o DARTSLIVE Co. Ltd., Ohta-ku, Tokyo 144-0033 (JP); YAMAMOTO, Makoto, c/o DARTSLIVE Co. Ltd., Ohta-ku, Tokyo 144-0033 (JP)
(74) Representative: Treeby, Philip David William
(86) International application number: PCT/JP2006/314225
(87) International publication number: WO 2007/010916

(56) References cited:
- JP-A- 7 334 185
- JP-A- 07 334 185
- JP-A- 11 023 195
- JP-A- 11 023 195
- JP-A- 2004 261 202
- JP-A- 2004 261 202
- JP-A- 2005 052 478
- JP-A- 2005 052 478
- JP-A- 2005 131 232
- JP-A- 2005 131 232

## Description

### Technical Field

The present invention relates to a game machine, game system and game program to which target hitting games such as darts are applied.

JP2005131232 that forms the basis for the independant claim discloses a game apparatus provided with a target, a CRT, a card reader and a cash box on the front surface. A player inserts his/her ID card into the card reader. The CRT displays information on the game, and is served as a game screen when a game making use of the dart is played. The target is hit with an arrow and also used as a tool so that a player obtains a point, area, numeral value, or the like by dart game. The game apparatus is provided with a buttom used for input of a player change in the dart game, and further the button is used as an operation input switch for a control unit.
JP2005052478 discloses a system for a game which comprises: a value storage means for associating the size of the virtual value of the virtual game parlor and the size of the real value of the real game parlor with player specifying information capable of specifying the player and storing the result; a virtual value updating means; a real value updating means; conversion rate setting means for setting a first conversion rate applied when converting the real value to the virtual value during the business hours of the real game parlor and a second conversion rate applied when converting the real value to the virtual value outside of the business hours; a real value conversion means for converting the real value to the virtual value at the first conversion rate during the business hours and at the second conversion rate outside of the business hours; and virtual replay using processing means and for performing a processing for making the converted virtual value be used in a game in the virtual game parlor.
JP2004261202 discloses a game server connected to a game machine group so as to be communication possible in a game system. The game machine group includes game terminals. Each game terminal inputs a request for holding a special game to be desired by the player himself/herself. In response to the request, the game server selects the player to be announced holding of the special game, based on stored individual player information, announces holding the special game only to the player, and allows the player to increase the commitment to hold and attend the special game.
In recent years, electronic darts machines spread, which detect hit areas of darts so as to automatically record points of each player and to sum the points up. Since the contents of the game follow the traditional darts, the game machines lack in easy fun and cheerful activity.

Therefore, the inventors of the present invention proposed a game machine and game method by which beginners can easily join a game of lots of amuse. (Japanese Patent Application No. 2003-372553)

### Disclosure of the Invention

### Problems to be Solved by the Invention

However, during practical management of the game machine, unfair operation of obtaining points by pushing board by hand (called "hand-push" hereafter) occur. There is no effective measure for preventing the hand-push.
There is a problem that a display of points record and sum and a display of executed game are intermixed causing confusion and inconvenience for playing, when a play of a plurality of players is automated.
There is another problem that it is difficult to compare players' scores because scores are simply arranged side by side, when the game record information of the plural players is displayed on the display.

There is further another problem that is difficult to display characters freely because the game machine has no character input means.

The present invention is invented so as to solve the above conventional problems and has an object to cope with the unfair operation of hand-push effectively, to clearly display achievement such as score, and to display characters freely on the game machine without character input means.

### Effect of the Invention

According to the present invention, the unfair operation of the hand-push is effectively handled.

### Means for Solving Problems

According to a first aspect of the present invention, there is provided a game machine according to claim 1.
Therefore, the unfair operation of the hand-push is effectively handled.

Preferable features according to the first aspect are set out in claims 2 to 5.

According to embodiments of claim 3, the first condition that game is not executed can be set.
Therefore, register for certification can be easily executed during so-called test mode.

According to embodiments of claim 4, the second condition that game is not executed can be set.
Therefore, the ranking can be easily obtained during so-called advertisement mode.

According to embodiments having the features of claim 5, the display image during the arrow throw is simplified and the players can concentrate on throwing the arrows.

According to a second aspect of the present invention, there is provided a game system according to claim 6.
Therefore, the unfair operation of hand-push is effectively handled.

A preferable feature according to the second aspect is set out in claim 7.

According to a third aspect of the present invention, there is provided a game program according to claim 8.
Therefore, the unfair operation of hand-push is effectively handled.
According to a fourth aspect of the present invention, there is provided a memory medium according to claim 9.

### The Best Mode for Carrying out the Invention

### Embodiment

### [Game Machine and Game System]

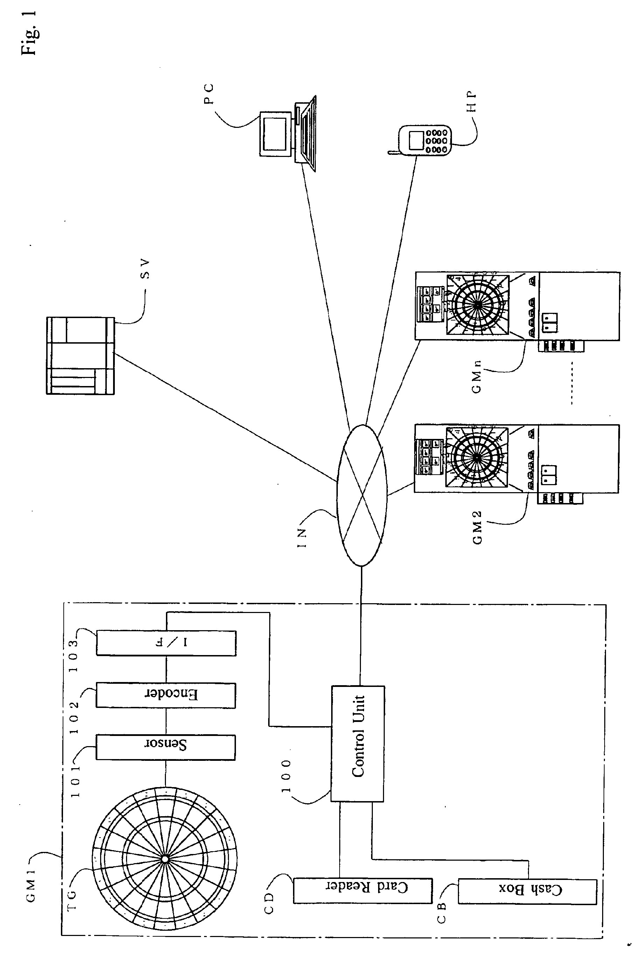

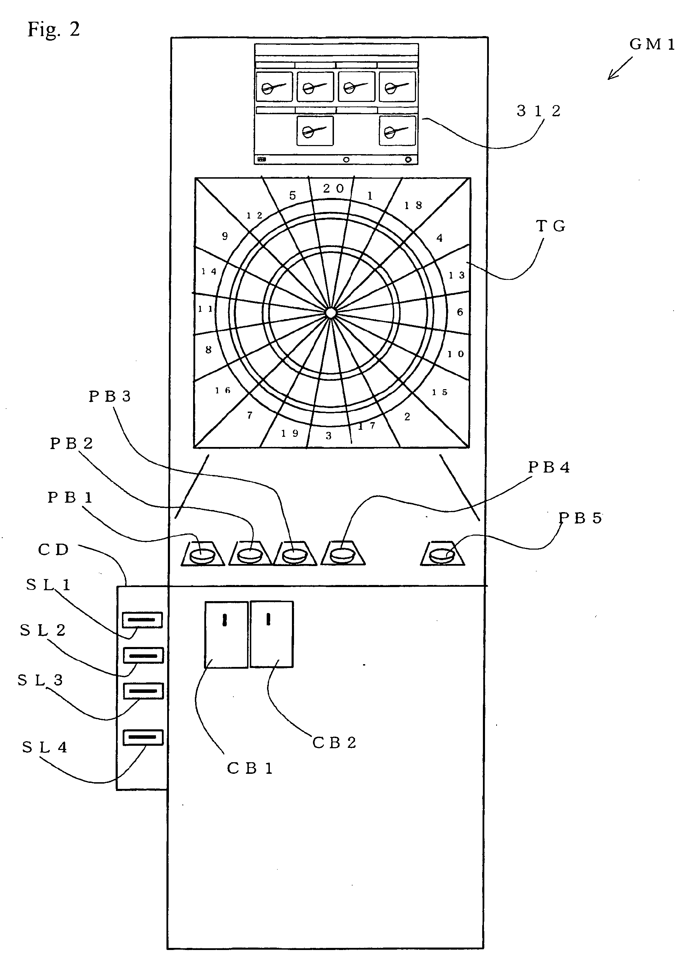

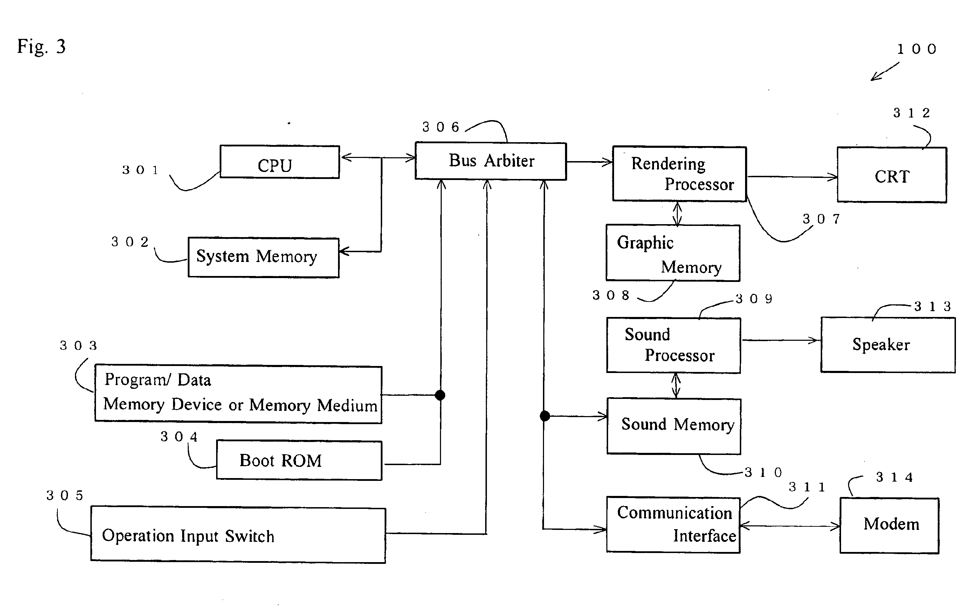

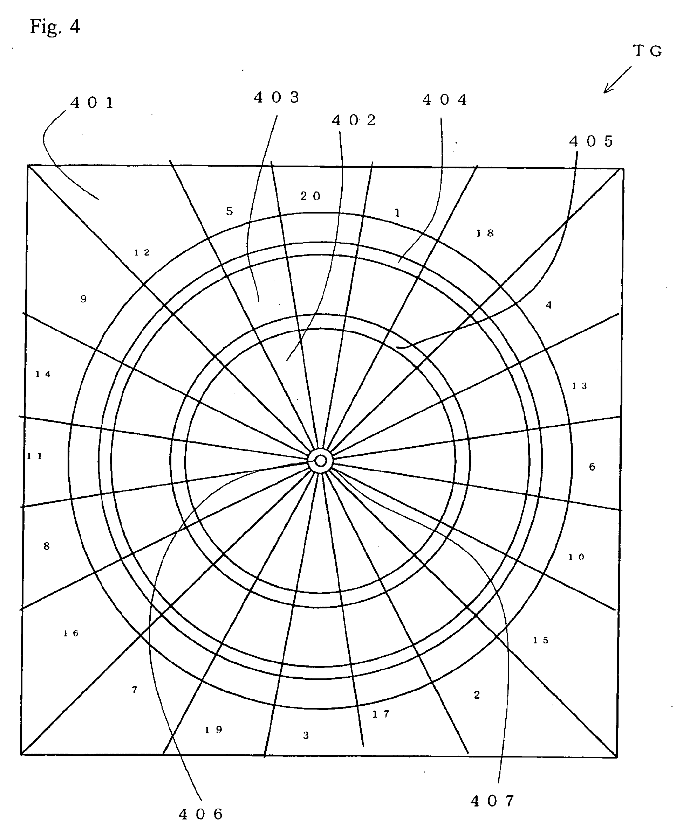

Fig. 1 is a block diagram showing a game system including the 1st embodiment of the game machine according to the present invention. Fig. 2 is an elevation view of the game machine in Fig. 1. Fig. 3 is a block diagram showing the game machine in Fig. 1. Fig. 4 is an elevation view showing the target of the game machine in Fig. 1.

In Fig. 1, a plurality of game machines GM1, GM2, ..., GMn are connected to a network IN to which a server SV, one or more personal computers PC, a handy phone PH or other communication terminals are connected.

The server SV inputs and outputs various information to and from the game machines GM1 to GMn connected to the network and controls a game when necessary. Players (not shown) of the game machines GM1 to GMn perform operation and inputting by means of a control unit 1000 included in the game machines GM1 to GMn for executing the game on the game machines GM 1 to GMn.

The game machine GM1 is described representatively. The game machine GM1 includes a target TG of the darts as one of target hitting game, a sensor 101 for detecting area where an arrow (not shown) hit, an encoder 102 for converting an detecting result of the sensor 101 into a numeral data and an interface 103 for inputting a signal of the encoder 102 to a control unit 100.

Therefore, the darts itself or other games adapting the darts can be controlled by the control unit 100.

A card reader CD and a cash-box CB are connected to the control unit 100 so that the control unit 100 detects fee (coin) inserted for executing the game and that the control unit 100 detects an ID card identifying a player so as to obtain the player's own information from the server SV.

The personal computer PC, the handy HP and other communication terminals can obtain various information concerning the game such as statistical result of the game machines GM1 to GMn, a ranking of the players and event information.

In Fig. 2, the target TG, a CRT 312, the card reader CD and the cash-box CB are provided on the front face of the game machine GM1. The player inserts the coin and his own ID card into the cash-box CB and the card reader CD, respectively. The card reader CD is provided with a plurality of (for example, 4) slots SL1 to SL4 so that a plurality of players can join the same game. It is also possible that a plurality of cards are inserted into each of the slots SL1 to SL4 for team competition such as "doubles".

The CRT 312 displays information concerning the game and has a function of a game display when a game adopting the darts is executed.

The target TG is not only target hit by the arrow but also a tool by which players obtain points, areas or numerals by arrow throwing.

Buttons PB1 to PB4 corresponding to slots SL1 to SL4 and a button PB5 for cancelling and for "Player Change" of the darts are provided on the game machine GM1. These buttons PB are used as an operation input switch 305 (Fig. 3) for the control unit 100. A Joystick or other input means may be provided in the game machine GM 1 as the operation input switch 305.

In Fig. 3, the control unit 100 includes a CPU 301, a boot ROM for storing a program for starting up the control unit 100 and a system memory 302 for storing a program executed by the CPU 301 and data.

The control unit 100 is provided with a rendering processor 307 for generating and for controlling an image to be displayed. A graphic memory 308 is provided in the control unit 100 for storing the generated image and material images for the generated image. The rendering processor 307 displays the generated image on the CRT 312.

A sound processor 309 for generating sound and a sound memory 310 for storing sound to be generated are provided in the control unit 100. The sound processor 309 generates a digital signal of the sound according to the data stored in the sound memory 310 so that the sound is output from a speaker 313 or a headphone (not shown).

A program data memory device or memory medium 303 is provided in the control unit 100. Game programs and data are transfer into the system memory 302, graphic memory 308 and sound memory 310.

The data stored in the memory medium 303 includes information concerning games.

A communication interface 311 and a MODEM 314 are provided in the control unit 100. The control unit 100 is connected through the MODEM 314 to the network IN.

The above components of the control unit 100 are connected to a bus and are arbitrated by a bus arbiter in communication.

A virtual player as subjective player representing the player may be registered in the ID card so that the virtual players play a match against one another.

In Fig. 4, the target TG is a well-known target of the darts, which has "bull" area of small circle in the center. The rest area around the bull area is divided along the circumference into 20 equal fan shape areas. Each fan shape area is divided into 4 areas along the radius.

The innermost area 402 of the fan shape area and the third from the area 403 from the area 402 are rather wide area called "single". The second area 405 from the area 402 is a rather narrow area called "triple ring" and the outermost area 404 is a narrow area called "double ring".

The bull area is radially divided into 2 so that 2 inner and outer areas 406 and 407 are shaped. In the bull area, the inner area 406 is called "double bull" or "inner bull" and the outer area 407 is called "single bull" or "outer bull". Generally, the area 406 is of higher point than the area 407.

Basic numerals are allocated to the fan-shape areas, that is, upper most center area is given "20" and the other areas are given "5", "12", "9", "14", "11", "8", "16", "7", "19", "3", "17", "2", "15", "10", "6", "13", "4", "18" and "1" along the circumference in the anticlockwise direction from the area "20". These numerals are shown by a display in the outer area 401. The location of the display is not limited to the area 401 and the location may be the single area etc.

### [Card Data Display]

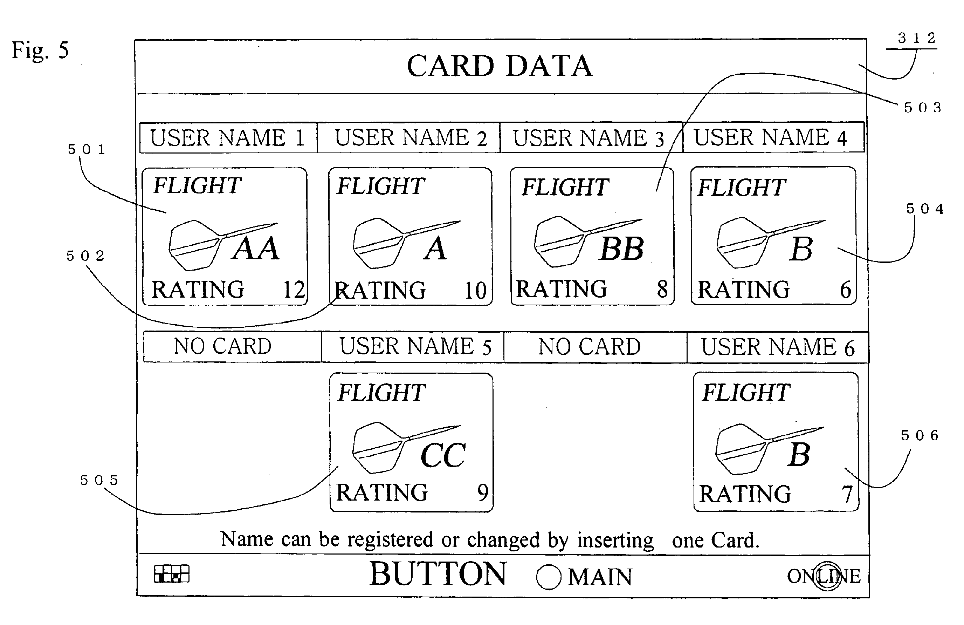

Figs. 5, 6 and 7 are figures showing examples of card data displayed on the display unit of the game machine in Fig. 1.

In Fig. 5, data of the ID cards 501, 502, 503 and 504 are displayed in this order along an upper horizontal line from left to right on the display unit 312. Data of ID card 505 is shown under the ID card 502, and data of ID card 504 is shown under the ID card 506. This data arrangement from left right corresponds to slots SL1, SL2. SL3 and SL4.

That is, the ID card 501 is inserted into the slot SL1, the ID cards 502 and 505 are inserted into the slot SL2, the ID card 503 is inserted into the slot SL3, and the ID cards 504 and 506 are inserted into the slot SL4.

On the upper side of the ID cards 501 to 506, players' names of USER Name 1, USER Name 2, USER Name 3, USER Name 4, USER Name 5 and USER Name 6 are shown. As card data, a rating set for each ID card is shown, for example. The rating is an indicator of game ability according to past game achievement.

By displaying ID cards, at most 8 ID cards, at positions corresponding to slots into which the ID cards are inserted, positions and combinations of players are clearly shown.

In Fig. 5, there are shown "BUTTON MAIN" and "ONLINE". "BUTTON MAIN" means that the display image returns to a main menu image such as a game select image by pushing the buttons from PB1 to PB5 etc. "ONLINE" means that the game machine GM1 works online, connected with the server.

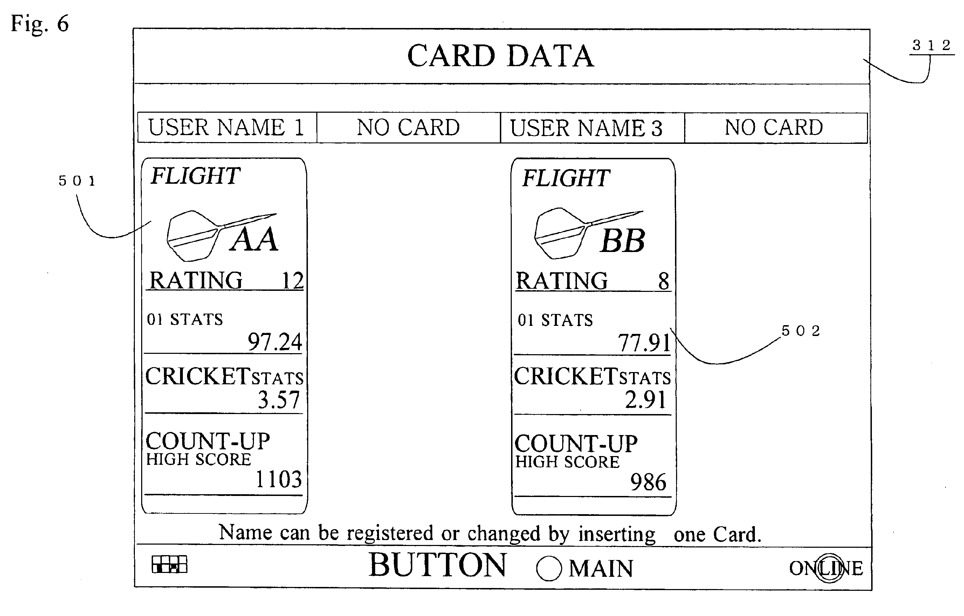

Fig. 6 shows a display mode for displaying card data of 4 cards at most. On the display unit 312, the data of the ID card 501 is shown at the left end. On the right of the ID card 501, with a distance of one blank area, the data of the ID card 502 is shown. A blank area exists on the right of the ID card 502. The arrangement of the cards corresponds to the slots SL1, SL2, SL3 and SL4.

In the display image of Fig. 6, more detailed data other than the rating such as "01 STATS", "CRICKETSTATS" and "COUNT-UP HIGH SCORE" can be shown, because less cards than in Fig. 5 are shown.

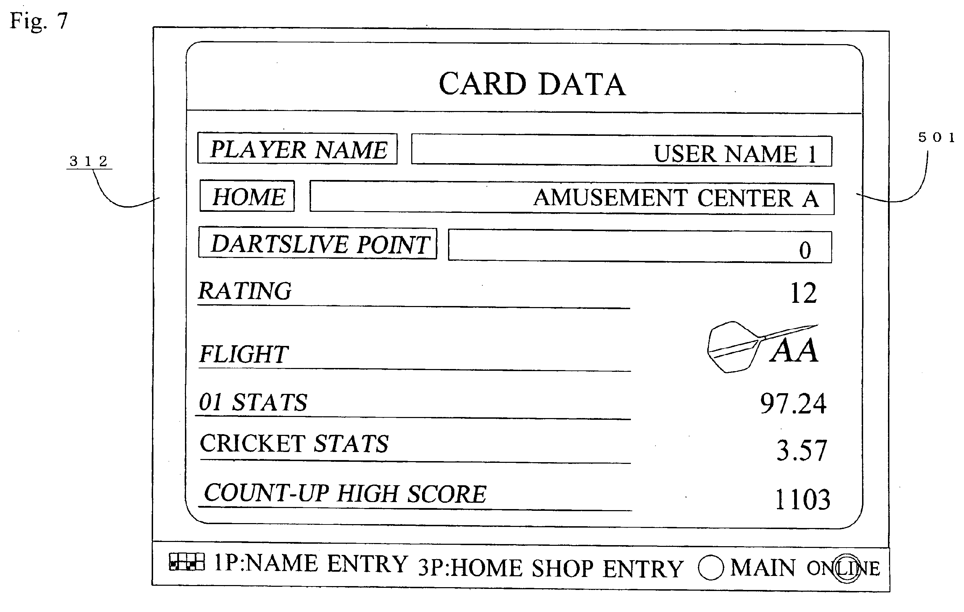

Fig. 7 shows a display mode for displaying only one card data. On the display unit 312, the data of the ID card 501 is shown.
In the display image of Fig. 7, further more detailed data other than the rating, "01 STATS", "CRICKETSTATS" and "COUNT-UP HIGH SCORE" can be shown, because the least card is shown.

In the display image of Fig. 7, "1P:NAME ENTRY", "3P: HOME SHOP ENTRY", "MAIN" and "ON LINE" are shown at the bottom. By "1P:NAME ENTRY", the display image is changed to an image for registering name such as players' user names. By "3P: HOME SHOP ENTRY", the display image is changed to an image for selecting and registering shop most frequently visited by the player of the best favorite with the players. "ONLINE" means that the game machine GM 1 works online, connected with the server.

### [Game Image]

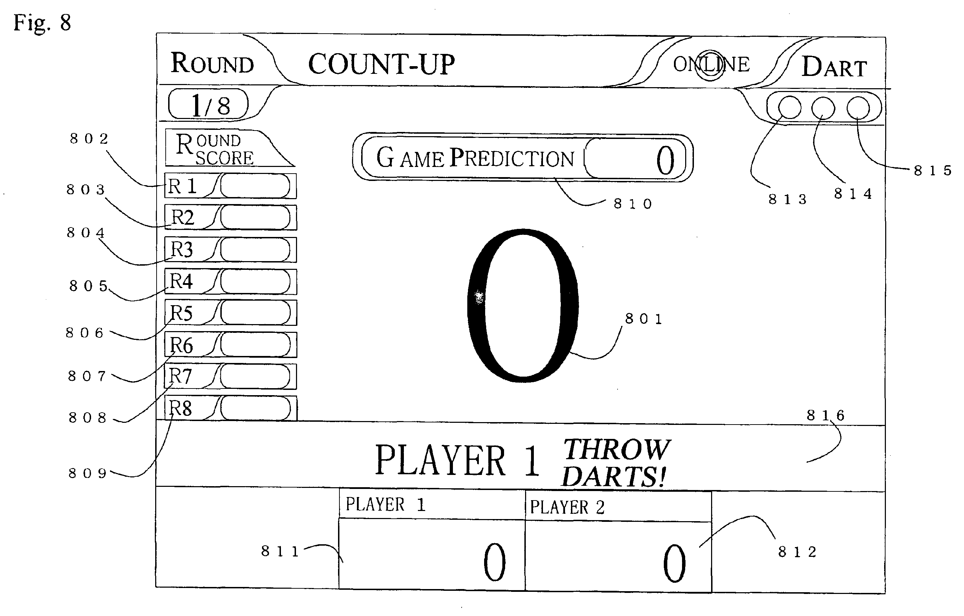

Figs. 8, 9, 10 and 11 are figures showing example of other game images shown on the display unit of the game machine.

Fig. 8 is a game image for "COUNT-UP" game of 8 rounds arrow throw by 2 players. The game has not been started, yet. At the center of the image, there are shown a point indicator 801 ("0" at present) corresponding to hit area of the board TG, points (scores) indicator 802 to 809 of each round, score prediction indicator 810 of the game still in progress, total score indicators 811 and 812 of each player, and finished arrow throw indicators 813, 814 and 815.

Further, an instruction for the 1st player (PLAYER 1) is shown by a message 816. The control unit 100 functions as a point display means concerning the score indication.

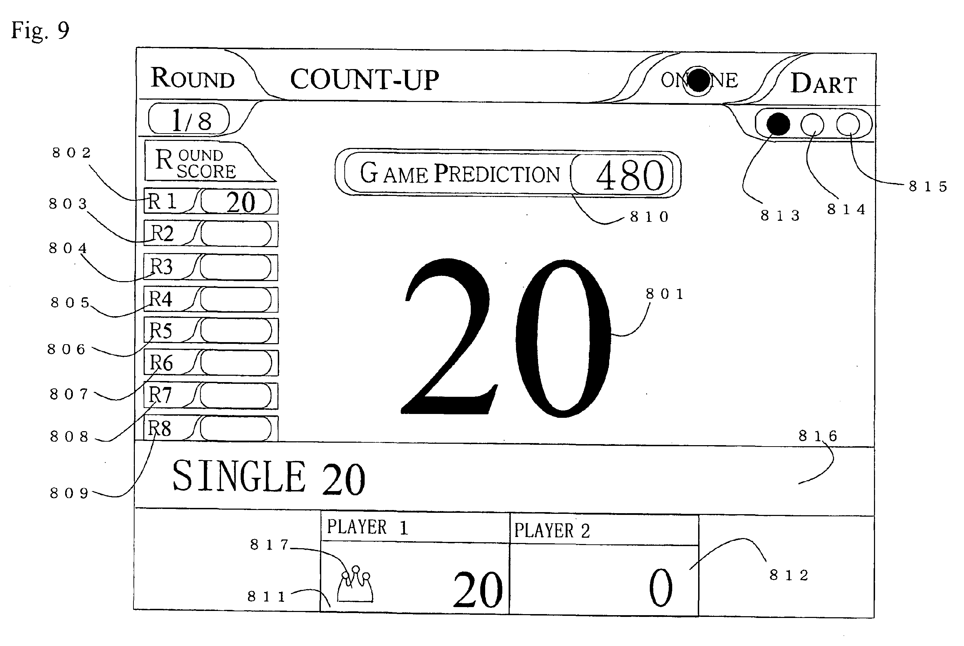

The image of Fig. 9 shows that the player of PLAYER 1 has finished the 1st throw of the 1st round from the situation of Fig. 8 and has obtained a score of "20" point. That is, a score "20" is shown at the indicator 801, a score "20" is shown at the indicator 802, and scores "0" are shown at the indicators from 803 to 809. The indicator 813 is reversed because the arrow throw is finished. In the indicator 810, a predicted score "480" at the end of the 8th round is shown. In the message 816, it is shown that the area hit by the arrow is "single". In the indicator 811, a crown-like symbol 817 showing the current player who has thrown the arrow.

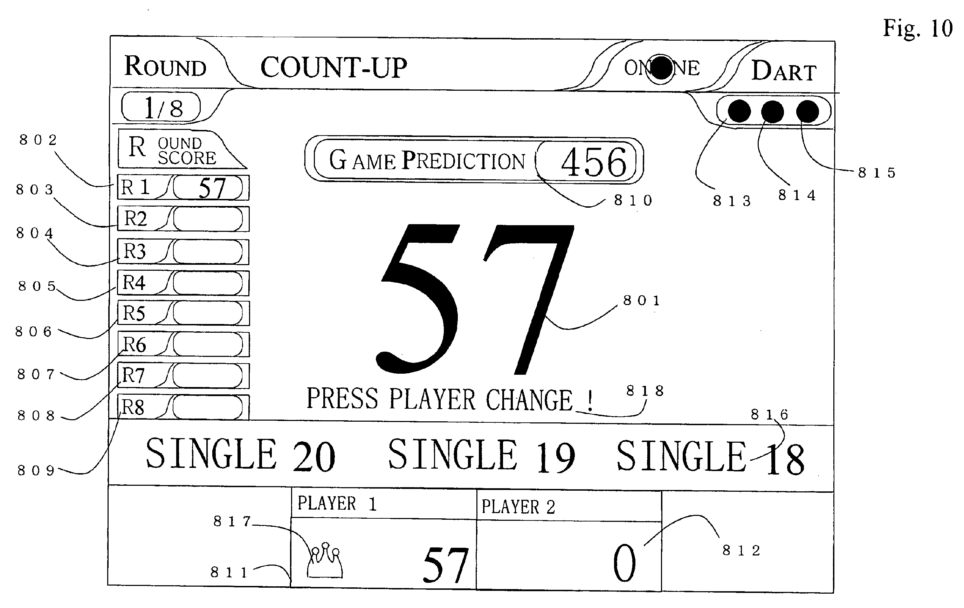

The image of Fig. 10 shows that the player of PLAYER 1 has finished the 2nd and 3rd throws from the situation of Fig. 9 and has obtained a total score of "57" point. That is, a score "57" is shown at the indicator 801, a score "57" is shown at the indicator 802, and scores "0" are shown at the indicators from 803 to 809. The indicators from 813 to 815 are reversed because the total arrow throws are finished. In the indicator 810, a predicted score "456" at the end of the 8th round is shown. In the message 816, it is shown that the areas hit by the 3 arrows thrown are "single20", "single 19" and "single 18". In the indicator 811, a crown-like symbol 817.is shown. Further, a message is shown under the score 801 that the player change buttons PB1 to PB4 are to be push due to completed arrow throw of the 1st round of the PLAYER 1.

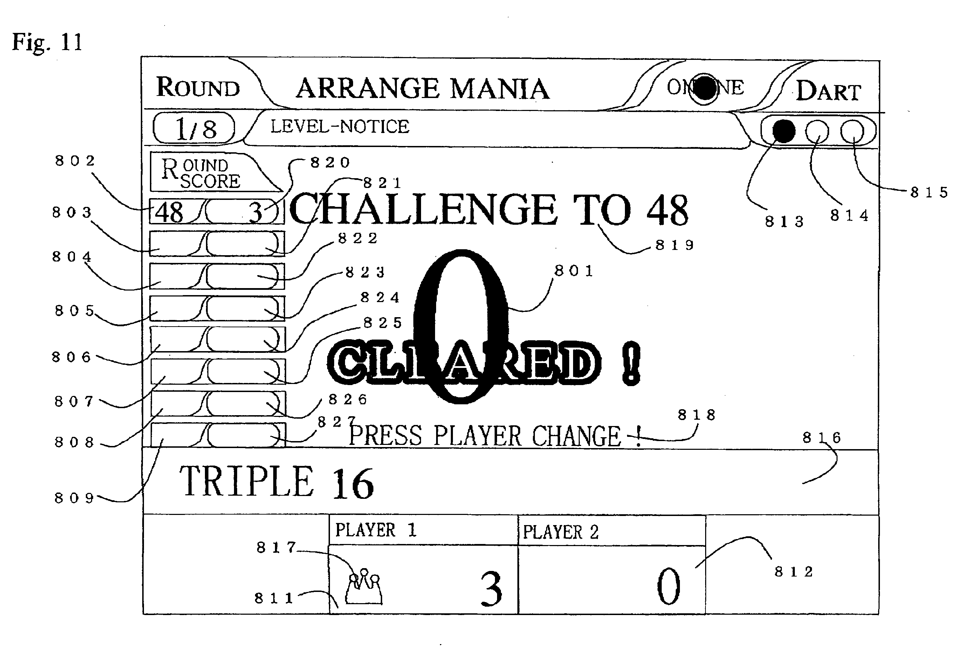

Fig. 11 is a game image for "ARRANGE MANIA" game of 8 rounds arrow throw by 2 players. The PLAYER 1 has cleared the 1st round by 1 arrow throw. Similarly to "COUNT-UP" in Figs. 8 to 10, the indicator 801 of the value ("0" at present) which is a subtracted value from "48" by the score, the score indicators 802 to 809 of each round, point indicators from 820 to 827, a indication of "CHALLENGE TO 48" showing the point for clearing each round, the total score indicators 811 and 812 of each player, and finished arrow throw indicators 813, 814v and 815. Further, an instruction for the 1st player (PLAYER 1) is made by a message 816. And "TRIPLE 16" is shown as a point obtained by one throw.

The game images above are shown in enough high brightness until the 1st throw is finished in one round. After the 1st throw, the image is changed to a dark and simple image. It is because that the light image prevents players from concentrated throw. The dart image improves the arrow throw circumstance. When a player pushes the player change button PB1 to PB4, it is judged that the round is finished and the game image is made lighter again.

The simplification of the image is not only by the darker image but also by other manners such as a translucent image or lighted off image.

### [Game Program]

Next, a game program is described, which is executed on the game machines GM1 to GMn and the game system.

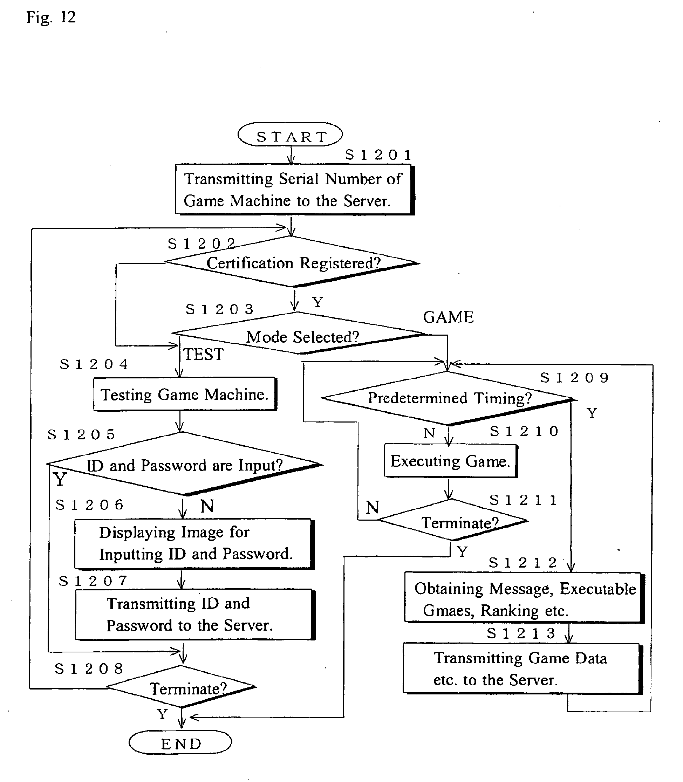

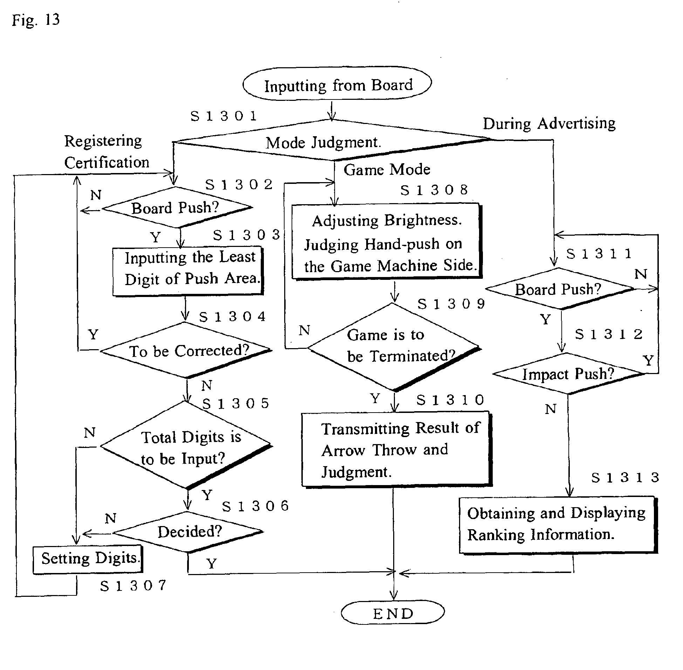

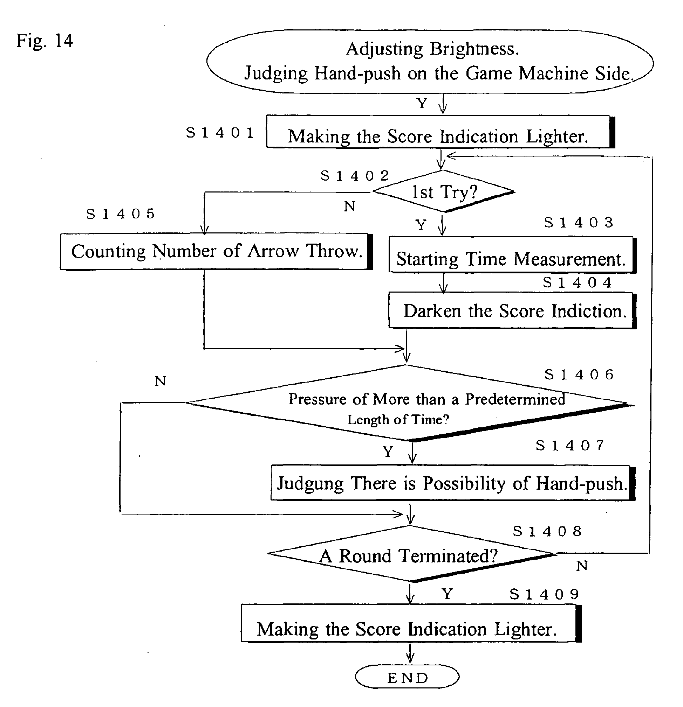

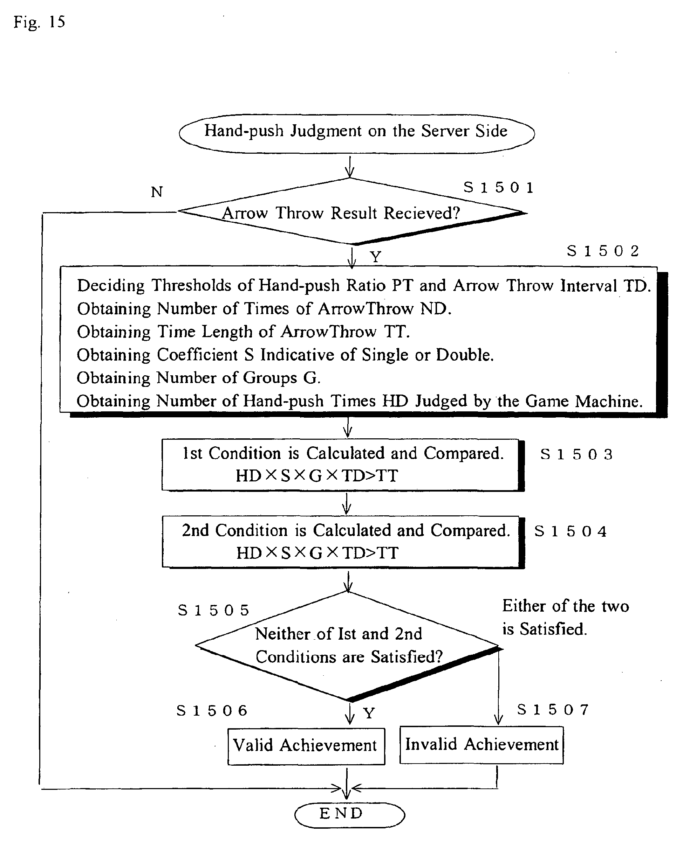

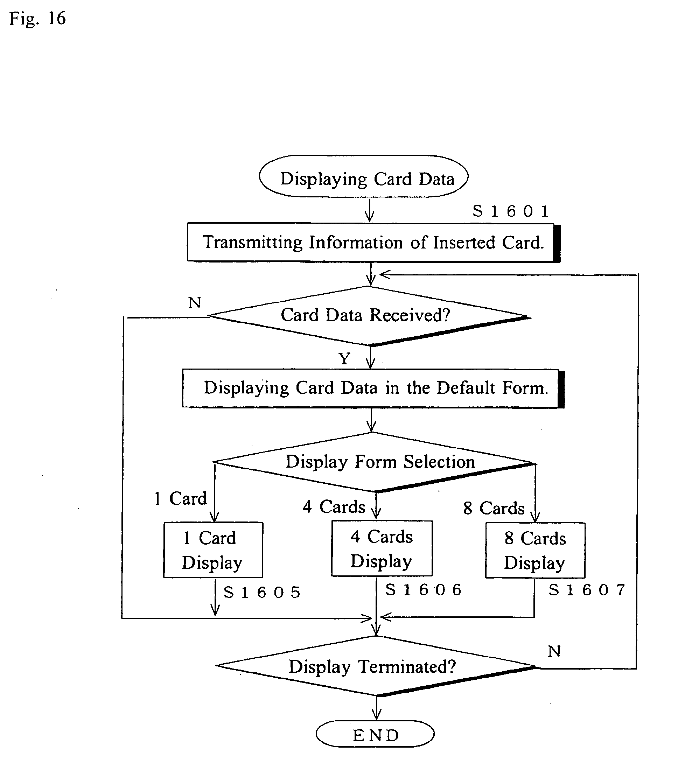

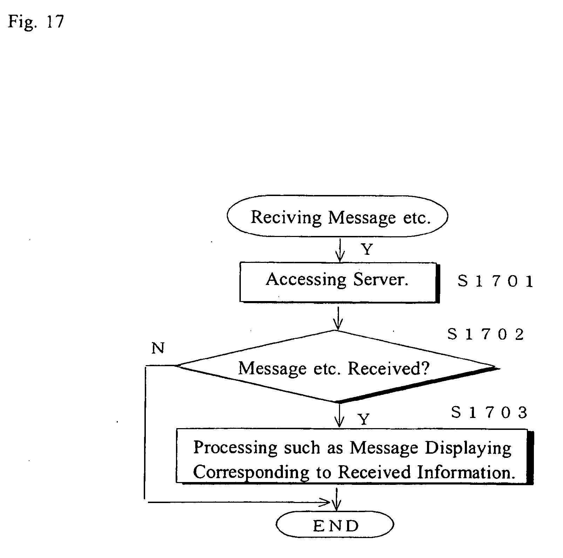

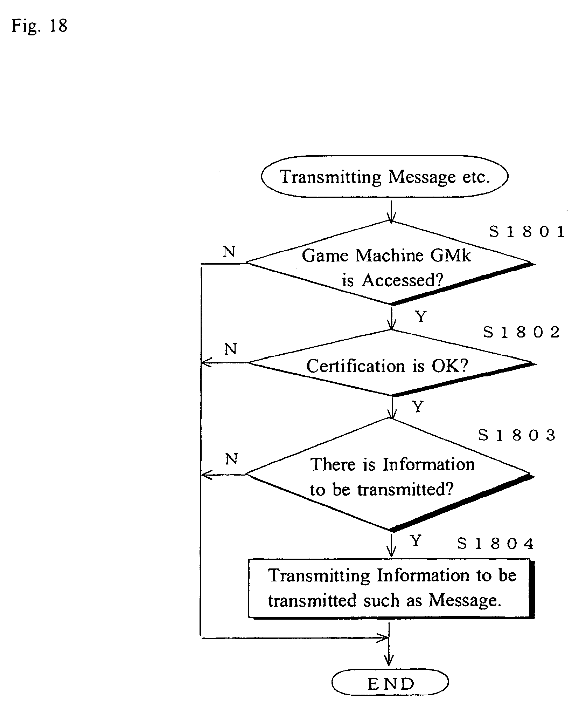

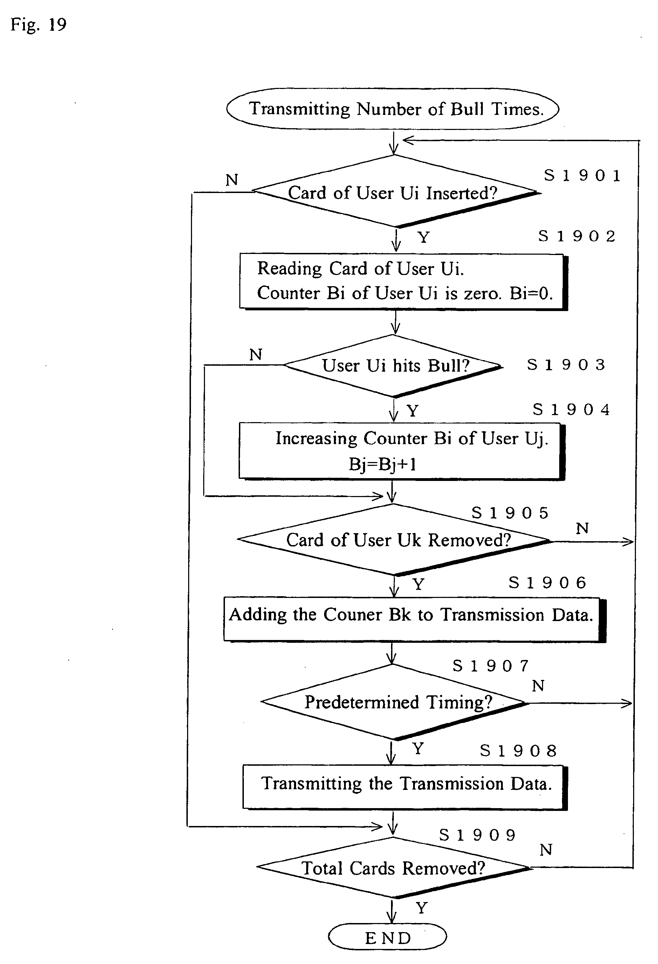

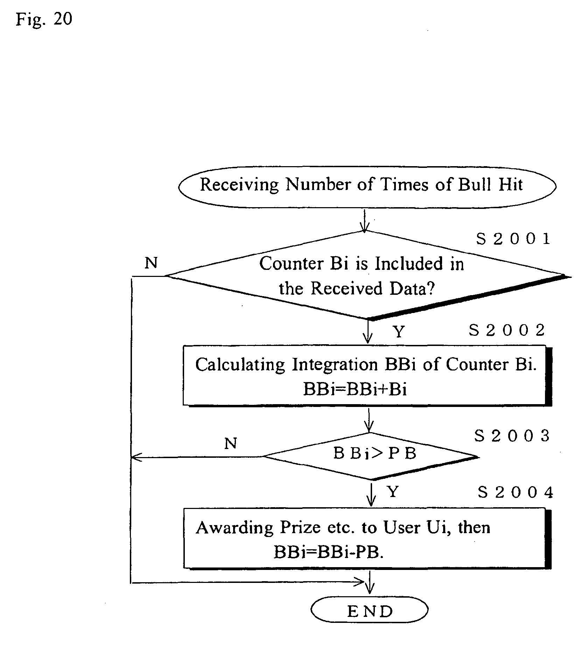

Fig. 12 is a flowchart showing the game machine operation in Fig. 1. Fig. 13 is a flowchart showing the input operation from the board such as arrow throw on the game machine in Fig. 1. Fig. 14 is a flowchart showing a processing executed in the game machine for detecting unfair operation of "hand-push". Fig. 15 is a flowchart showing a processing executed in the server for judging "hand-push" according to the processing in the game machine. Fig. 16 is a flowchart showing a processing for displaying card data in the game machine in Fig. 1. Fig. 17 is a flowchart showing a processing for receiving message etc. in the game machine in Fig. 1. Fig. 18 is a flowchart showing a processing for transmitting message etc. in the game system in Fig. 1. Fig. 19 is a flowchart showing a processing for transmitting number of times of bull in the game machine in Fig. 1. Fig. 20 is a flowchart showing a processing for receiving number of times of bull in the game system in Fig. 1.

In Fig. 12, when the game machine (GM1, for example) is started, the game machine GM1 is certified by a peculiar serial number to the game machine (peculiar to the control unit 100). Then, the processing below can be executed.

Step S1201: When the game machine is started, the game machine GM1 transmits the serial number to the server SV. In the server SV, the serial number, an ID number of the manager (a game machine owner, an operator in a game center etc.), a password of each game machine are registered. The server SV permits the usage of the game machine when the game machine is certified by the registered serial number etc.

Step S1202: It is judged whether registration processing for certification of the relationship is completed or not of the serial number of the game machine with the manager's ID number and the password. When the registration is completed, the processing is advanced to the step S1203, otherwise to the step S1204.

Step S1203: It is judged which mode is to be executed, of the "test mode" for executing the registration processing for certification and game machine test and "game mode" for executing the game. When the "test mode" is to be executed, the processing is advanced to the step S1204, and when the "game mode" is to be executed, the processing is advanced to the step S1209.

Step S1204: The game machine test is executed, and the processing is advanced to the step S1205.

Step S1205: It is selected whether the ID and the password are input in order to execute registration processing. When the ID and the password are input, the processing is advanced to the step S1206, otherwise to the step S1208.

Step S1206: An input image is displayed on the display unit 312. After the input, the processing is advanced to the step S1207.

Step S1207: The ID and the password are transmitted to the server SV. The transmitted ID and password are registered together with the relationship with the serial number of the game machine in the server. Concerning the transmission of the ID and password, the control unit 100 functions as a communication means.

Step S1208: Following to the step S1207, it is judged whether the "test mode" is terminated or not. When the "test mode" is to be terminated, the processing is immediately terminated, otherwise, the processing is returned to the step S1202.

Step S1209: In the step S1209, it is judged whether it is the moment to access to the server. During the "game mode", the game machine accesses to the server at a predetermined timing, for example every 20 minutes. When it is the timing to access to the server, the processing is advanced to the step S1212, otherwise, to the step S1210.

Step S1210: A new game or the current game is executed, and the processing is advanced to the step S1211.

Step S1211: It is judged whether the game execution is to be terminated or not. When the game execution is to be terminated, the processing is immediately terminated, otherwise, the processing is returned to the step S1209.

Step S1212: Various information is obtained from the server SV through the access to the server SV. Information includes game kinds executable on each game machine GM1, message to be displayed on each game machine, ranking of the players etc.

Step S1213: Following to the step S1212, the game information etc. are transmitted from the game machine to the server. Then, the processing is returned to the step S1209.

In Fig. 13, the processing is executed by the following steps, when a pressure is put on the board due to arrow hitting etc. during the game execution or in other cases.

Step S1301: First, the operation mode of the game machine is judged. In the operation modes, there are "registration mode" for certification in the "test mode (steps from S1204 to S1208)", "game mode (steps from S1209 to S1213)" and "advertisement mode ". The test mode is called the 1st mode that the game is not executed, and the advertisement mode is called the 2nd mode that the game is not executed. When the "registration mode" for certification, the processing is advanced to the step S1302. When the "game mode", the processing is advanced to the step S1308. When the "advertisement mode", the processing is advanced to the step S1312.

Step S1302: The pressure on the board is watched. The processing is advanced to the step S 1303 when the pressure is put on the board.

Step S1303: Inputting the least digit or the number allocated to the area in the board TG where the pressure is put, then the processing is advanced to the step S1304. The game machine does not have any input means such as a key-board. However, a simple input operation is possible by the number allocated to the areas on the board TG. Inputting rule is especially simple and useful when only the least digit is used.

Step S1304: It is judged whether the number input in the step S1303 is to be corrected or not. Whether the number is to be corrected or not is selected by the button PB5 for example.

Step S1305: It is judged whether the input of the total digits of the ID and the password is completed or not. When the input of the total digits is completed, the processing is advanced to the step S1306, otherwise, to the step S1307.

Step S1306: It is judged whether the input of the ID and password is decided or not. The decision operation is performed by the buttons PB 1 to PB4 for example. When the input is decided, the processing is immediately terminated, otherwise the processing is advanced to the step S 1307.

Step S1307: When the digits to be input are partially input, other digits not input are set. Then, the processing is returned to the step S1302.

Step S 1308: The brightness of the points (scores) indicators 802 to 809 of the game image is adjusted and the hand-push is judged on the game machine side. Every when the arrow throw of each round is finished, the processing is advanced to the step S1309. As for the brightness adjustment of the score indicators 802 to 809, the control unit functions as a brightness adjusting means.

The hand-push means that a player obtains points unfairly by pushing board TG by hand without throwing arrows. The points should be eliminated from the achievement of the game. The hand-push can be distinguished by the pressure duration time generally. However, sometimes the reaction of the board TG is checked and the board may be push by other operations, so it is inadequate that the score is always voided.
Therefore, in the present game program, the hand-push judgment is made according to the pressure duration time on the game machine side, then, the score is comprehensively judged to be valid or invalid on the server side. As for the hand-push judgment, the sensor 101, encoder 102, I/F 103 and control unit 100 function as hand-push judging means.

Step S 1309: It judged whether the game is to be terminated or not. When the game is to be terminated, the processing is advanced to the step S1310, otherwise, returned to the step S1308.

Step S1310: The result of the arrow throw and the hand-push judgment are transmitted to the server. Then, the processing is immediately terminated.

Step S1311: The pressure on the board is watched. The processing is advanced to the step S1312 when the pressure is put on the board. When advertising mode, the processing is executed that ranking of the players is obtained from the server and displayed when the operation of pushing the board by a hand is performed. During the advertising mode, a training arrow throw is permitted. Therefore, it is prevented the ranking is started to be obtained by an arrow throw. And unnecessary access to the server is prevented. As for ranking obtaining, the control unit functions as a communication means.

Step S1312: The pressure duration time on the board TG is judged similarly to the step S1308. When the so-called hand-push is made, the processing is advanced to the step S1313. When not hand-push, that is, the training arrow throw, the processing is advanced to the step S1311.

Step S 1313: Through the accessing to the server, the ranking is obtained and displayed.

In Fig. 14, the brightness adjustment of the step S 1308 and the hand-push judgment on the game machine side are executed by the following steps.

Step S1401: First, the points (score) indicators from 802 to 809 is adjusted to be lighter so that the state of the game is clearly shown.

Step S1402: Following to the step S1401, it is judged whether the arrow throw is the 1st throw within one round or not. When it is 1st throw, the processing is advanced to the step S1403, otherwise, to the step S1405.

Step S1403: The time measurement is started of the arrow throw, then, the processing is advanced to the step S1404.

Step S1401: The points (score) indicators from 802 to 809 is adjusted to be darker so that the display is simplified. Then, the processing is advanced to the step S1406.

Step S1405: Number of times of the arrow throw is counted, then, the processing is advanced to the step S1406.

Step S1406: It is judged whether the pressure continues for more than a predetermined time or not, that is, it is judged whether there is possibility of hand-push or not. When the pressure continues for more than a predetermined time, the processing is advanced to the step S1407, otherwise, to the step S1408.

Step S1407: A judgment of the hand-push is recorded and the processing is advanced to the step S1408.

Step S1408: It is judged whether one round is finished or not, that is, the total arrow throws of one round are finished or not. When one round is finished, the processing is immediately terminated, otherwise, the processing is returned to the step S1402.

Step S1409: The point (score) indicators from 802 to 809 are adjusted lighter again. Then, the processing is immediately terminated.

According to the processing above, information necessary for the comprehensive judgment of the hand-push is obtained.

In Fig. 15, the server SV judges the hand-push comprehensively by the following steps, when the information concerning the hand-push obtained in Fig. 14 is transmitted to the server in the step S 1310.

Step S1501: First, it is judged whether the result of the arrow throw is received or not. When the result of the arrow throw is received, the processing id advanced to the step S1502, otherwise, the processing is immediately terminated.

Step S1502: Parameters for the hand-push judgment are set and necessary information is obtained. As the parameters, a threshold PT of ratio of number of times of hand-push judgment in the step S1308 relative to the total number of arrow throw, and a threshold of time distance between successive arrow throws.
For example, PT is set to be "3" in a usual game, that is, when a number of times of hand-push is not less than 1/3 of the total number of the arrow throw, the game score is deemed as invalid. In a free game, PT=5 for example, that is, when the ratio is not less than 1/5, the game score is deemed as invalid. The threshold TD of the time distance between successive arrow throws is 20 sec for example. When a mean time distance is not more than 20 sec, the arrow throw is deemed to be abnormal and the game score is voided.
The total number of times of arrow throws (designated as ND), the necessary time for the total arrow throws (designated as TT) and the number of times of the hand-push judgment (designated as HD) are sent from the game machine are data for discriminating the PT and TD.
Parameters are set indicating the game is singles or doubles (designated as S), and a number of groups (designated as G). S is "1" when singles, and "2" when doubles. The number of groups means the total participants of players or groups joining in the game. When the number of participants is one person or one group, G is "1", and when two, G is "2".

Step S1503: Following to the step S1502, the 1st condition is judged. 1st Condition: HDx PT>ND

Step S1504: Following to the step S1503, the 2nd condition is judged. 2nd Condition: HDxSxGxTD〉TT

Step S1505: It is judged whether neither the 1st nor 2nd condition is fulfilled. When neither condition is fulfilled, the processing is advanced to the step S1506, otherwise, to the step S1507.

Step S1506: The score (result) sent from the game machine is registered as a valid score. Then, the processing is immediately terminated.

Step S1507: When either the 1st or second condition is fulfilled, the result is voided deeming that there is unfairness of hand-push.

The processing in Fig. 15 can be executed on the game machine side. The game machine may send a comprehensive hand-push judgment to the server, and the server may register the result of the judgment.

In Fig. 16, the display processing of the card data in Figs. 5 to 7 are executed in the following steps.

Step S1601: The data of the ID card inserted into the card reader CD is sent to the server SV. The game machine requests the server SV related information to the ID card.

Step S1602: The card data sent from the server SV is watched. When the data is received, the processing is advanced to the step S1603. If the data cannot be received, the processing is jumped to the step S1608.

Step S1603: The card data is displayed in a default format, for example, in the format of 8 cards in Fig. 5.

Step S1604: Following to the step S1603, display format selection is available. When the format of 1 card in Fig. 7 is selected, the processing is advanced to the step S1605. When the format of 4 cards in Fig. 6 is selected, the processing is advanced to the step S1606. When the format of 8 cards in Fig. 5 is selected, the processing is advanced to the step S1607.

Step S1605: The card data is displayed in the 1 card display format of Fig. 7, then, the processing is advanced to the step S 1608.

Step S1606: The card data is displayed in the 4 cards display format of Fig. 6, then, the processing is advanced to the step S1608.

Step S1607: The card data is displayed in the 8 cards display format of Fig. 5, then, the processing is advanced to the step S 1608.

Step S1608: It is judged whether the display is to be terminated or not. When it is to be terminated, the processing is immediately terminated, otherwise, advanced to the step S1602.

The selection of the step S1604 or S 1608 and the termination judgment is performed by the buttons from PB 1 to PB5 for example.

As for the card data display in Figs. 5 to 7 and Fig. 16, the control unit 100 functions as a display means.

In Fig. 17, the message receiving processing in the step S 1212 is executed by the following steps.

Step S1701: First, the server SV is accessed.

Step S1702: It is judged whether the message or other data is received or not. When none of the data is received, the processing is immediately terminated. When any data is received, the processing is advanced to the step S1703.

Step S1703: Processing corresponding to the data is executed, such as, displaying the the received message on the display unit 312, preparing for the change of the executable games and so forth. Then, the processing is immediately terminated.

In Fig. 18, the processing executed on the server SV for the reception processing is executed by the following step.

Step S1801: First, the game machine accessing to the server is discriminated. The game machine is designated as GMk, here.

Step S1802: The game machine GMk is examined for certification. It is judged whether the access is permitted or not. When the access is permitted, the processing is advanced to the step S1803, otherwise, the processing is immediately terminated.

Step S1803: It is judged whether there is data to be transmitted to the game machine GMk. When there is the data, the processing is advanced to the step S1804, otherwise, the processing is immediately terminated.

In Fig. 19, processing is shown for transmitting the number of hit times of the bull of players to the server SV during the game mode. Since the possibility that the bull is hit is rather low, the player who hits the bull feels plenty of satisfaction. The transmission of the number of hit times of bull is executed by the following steps.

Step S1901: It is judged whether a ID card of any player (designated as Ui) is inserted into the card reader CD or not. When a card is inserted, the processing is advanced to the step S1902, otherwise, to the step S 1909.

Step S1902: The ID card of the player Ui is read, and a counter Bi of the number of hit times of bull is reset to be "0".

Step S1903: It is judged whether any player Uj hits the bull or not. When the player hits the bull, the processing is advanced to the step S 1904, otherwise, to the step S 1905.

Step S1904: The counter Bj is increased by "1".

Step S1905: It is judged whether any player Uk removes the ID card or not. When the card is removed, the processing is advanced to the step S 1906, otherwise, is returned to the step S1901.

Step S1906: The counter Bk is added to the transmission data for a preparation for the accessing to the server next time. Then, the processing is advanced to the step S1907.

Step S1907: It is judged whether it is the timing of accessing to the server SV. When it is the timing, the processing is advanced to the step S1908, otherwise, is returned to the step S1901.

Step S1908: The transmission data is transmitted to the server. Then, the processing is advanced to the step S 1909.

Step S1909: It is judged whether all the ID cards are removed from the card reader or not. When all the ID cards are removed from the card reader, the processing is immediately terminated, otherwise, is returned to the step S1901.

In Fig. 20, the server executes the following steps when the server receives the transmission data in Fig. 19.

Step S201: It is judged whether the counter Bi of any one of the players is included in the received data or not. When the counter Bi is included, the processing is advanced to the step S2002, otherwise, the processing is immediately terminated.

Step S2002: The received number of times Bi is added to a number BBi of hit times of bull which is integrated for the player Ui. Then, the processing is advanced to the step S2003.

Step S2003: It is judged whether the BBi exceeds a predetermined number PB of times or not. PB is a number of hit times of bull for rewarding the player with a prize etc. for example. When BBi〉PB, the processing is advanced to the step S2004, otherwise, the processing is immediately terminated.

Step S2004: It is decided that the prize is given to the player Ui and BBi is decreased to be (BBi-PB).

### Brief Description of Drawings

Fig. 1 is a block diagram showing a game system including the 1st embodiment of the game machine according to the present invention. (Embodiment)
Fig. 2 is an elevation view of the game machine in Fig. 1. (Embodiment)
Fig. 3 is a block diagram showing the game machine in Fig. 1. (Embodiment)
Fig. 4 is an elevation view showing the target of the game machine in Fig. 1. (Embodiment)
Fig. 5 is a figure showing an example of card data displayed on the display unit of the game machine in Fig. 1. (Embodiment)
Fig. 6 is a figure showing another example of card data displayed on the display unit of the game machine in Fig. 1. (Embodiment)
Fig. 7 is a figure showing further another example of card data displayed on the display unit of the game machine in Fig. 1. (Embodiment)
Fig. 8 is a figure showing an example of game image shown on the display unit of the game machine. (Embodiment)
Fig. 9 is a figure showing another example of game image shown on the display unit of the game machine. (Embodiment)
Fig. 10 is a figure showing further another example of game image shown on the display unit of the game machine. (Embodiment)
Fig. 11 is a figure showing further another example of game image shown on the display unit of the game machine. (Embodiment)
Fig. 12 is a flowchart showing the game machine operation in Fig. 1. (Embodiment)
Fig. 13 is a flowchart showing the input operation from the board such as arrow throw on the game machine in Fig. 1. (Embodiment)
Fig. 14 is a flowchart showing a processing executed in the game machine for detecting unfair operation of "hand-push". (Embodiment)
Fig. 15 is a flowchart showing a processing executed in the server for judging "hand-push" according to the processing in the game machine. (Embodiment)
Fig. 16 is a flowchart showing a processing for displaying card data in the game machine in Fig. 1. (Embodiment)
Fig. 17 is a flowchart showing a processing for receiving message etc. in the game machine in Fig. 1. (Embodiment)
Fig. 18 is a flowchart showing a processing for transmitting message etc. in the game system in Fig. 1. (Embodiment)
Fig. 19 is a flowchart showing a processing for transmitting number of times of bull in the game machine in Fig. 1. (Embodiment)
Fig. 20 is a flowchart showing a processing for receiving number of times of bull in the game system in Fig. 1. (Embodiment)

### Explanation of Letter or Numerals

- SV: Server
- GM1 to GMn: Game Machine
- TG: Target
- CD: Card Reader
- CB: Cash Box
- PB: Button
- 100: Control Unit
- 101: Sensor
- 312: Display Monitor
- 303: Program Data Memory Device or Memory Medium
- 305: Operation Input Switch

## Claims

1. A game machine comprising,
arrows,
a target (TG),
a sensor (101) for detecting an area of said target (TG) where pressure is put when said pressure is put,
a control unit (100) to which a detecting result of said sensor (101) is input, and
a display monitor (312) controlled by said control unit (100),
**characterized in that**:
the game machine further comprises a hand-push judgment means for judging whether said target (TG) is hit by said arrow or push by other means than said arrows according to duration time of said pressure,
wherein said target (TG) is divided into a plurality of areas (401, 402, 403, 404, 405, 406, 407) each of which an indicator is allocated to, said arrows are thrown by said plurality of players successively, and a game is proceeded according to indicators of said areas hit by said arrows.

2. A game machine according to Claim 1, further comprising,
a communication means (100) for transmitting number of times and time interval of said pressure on said target (TG) and judgment of said hand-push judgment means.

3. A game machine according to Claim 1 or 2,
further comprising,
a communication means (100) for transmitting an ID of a manager of said game machine by said indicators when pressure is put on said target (TG) on 1 st condition that said game is not executed.

4. A game machine according to any one of Claims 1 to 3,
further comprising,
a card reader (CD) for reading players' ID cards, and
a communication means (100) for executing communication in order to obtain a ranking of said players when pressure is put on said target (TG) on 2nd condition that game is not executed.

5. A game machine according to any one of Claims 1 to 4
wherein said game is proceeded by predetermined times of arrow throw of each said player, further comprising,
a point display means for displaying points of said players on said display monitor (312) according to indicators corresponding to said areas hit by said arrows, and
a brightness adjusting means for making said point display lighter at 1st throw among predetermined throw times, for adjusting said point display darker after said 1st throw, and making said point display lighter again after said predetermined throw times.

6. A game system comprising a game machine and a server (SV),
said game machine comprising,
arrows,
a target (TG),
a sensor (101) for detecting an area of said target (TG) where pressure is put when said pressure is put,
a control unit (100) to which a detecting result of said sensor (101) is input,
a display monitor (312) controlled by said control unit (100), and
a card reader (CD) for reading players' ID cards,
**characterized in that**:
the game machine further comprises a hand-push judgment means for judging whether said target (TG) is hit by said arrow or push by other means than said arrows according to duration time of said pressure, and
a communication means (100) for transmitting number of times and time interval of said pressure on said target (TG) and judgment of said hand-push judgment means
wherein said target (TG) is divided into a plurality of areas (401, 402, 403, 404, 405, 406, 407) each of which an indicator is allocated to, said arrows are thrown by said plurality of players successively, and a game is proceeded according to indicators of said areas hit by said arrows, and
said server (SV) comprises,
a player information control means for controlling information of said ID cards and achievement corresponding to said ID cards, and
a valid arrow throw judgment means for judging whether said arrow throw is valid or not according to said number of times and said time interval of said pressure on said target (TG) and said judgment of said hand-push judgment means which are transmitted from said communication means (100).

7. A game system according to Claim 6, wherein said valid arrow throw judgment means judges 1 st and 2nd conditions, that is,
1st condition: HD× PT > ND,
2nd condition: HD×S×G×TD> TT,
where,
ND: number of times of said pressure on said target (TG),
TT: time length necessary for said pressure ofND times,
HD: number of times, among ND times, that said hand-push judgment means judges said target (TG) is push by other means than said arrows,
PT: a threshold of hand-push ratio (HD/ND),
TD: a threshold of said time interval of said arrow throw,
S: a coefficient concerning single game or doubles game, and S=1 when single, and S=2 when doubles, and
G: number of groups,
so as to judges said arrow throw is invalid when either said 1st or 2nd condition is fulfilled.

8. A game program including program codes executable by a computer, for a game machine which comprises arrows, a target (TG), a sensor (101) for detecting an area of said target (TG) where pressure is put when said pressure is put, a control unit (100) to which a detecting result of said sensor (101) is input, and a display monitor (312) controlled by said control unit (100), wherein said target (TG) is divided into a plurality of areas (401, 402, 403, 404, 405, 406, 407) each of which an indicator is allocated to, said arrows are thrown by said plurality of players successively, and a game is proceeded according to indicators of said areas hit by said arrows,
**characterized in that**:
said program codes comprises,
a hand-push judgment step for judging according to duration time of said pressure on said target (TG) whether said target (TG) is hit by said arrow or push by other means than said arrows,
a step for judging 1st condition, that is,
1 st condition: HD×PT> ND,
where,
ND: number of times of said pressure on said target (TG), TT: time length necessary for said pressure of ND times,
HD: number of times, among ND times, that said hand-push judgment means judges said target (TG) is push by other means than said arrows,
PT: a threshold of hand-push ratio (HD/ND),
TD: a threshold of said time interval of said arrow throw,
S: a coefficient concerning single game or doubles game, and S=1 when single, and S=2 when doubles, and
G: number of groups,
a step for judging 2nd condition, that is,
2nd condition: HD×S×G×TD> TT, and
a judging step for judging that said arrow throw is invalid when either said 1st or 2nd condition is fulfilled, otherwise, valid.

9. A memory medium, readable by a computer, which stores said program according to Claim 8.

## Patentansprüche

1. Spielvorrichtung, umfassend:
Pfeile,
ein Ziel (TG),
einen Sensor (101) zum Erfassen einer Fläche des Ziels (TG), wo Druck ausgeübt wird, wenn der Druck ausgeübt wird,
eine Steuereinheit (100), in die ein Erfassungsergebnis des Sensors (101) eingegeben wird, und
einen Anzeigemonitor (312), der von der Steuereinheit (100) gesteuert wird,
**dadurch gekennzeichnet, dass**:
die Spielvorrichtung des Weiteren ein Handdruck-Beurteilungsmittel zum Beurteilen entsprechend der Zeitdauer des Drucks, ob das Ziel (TG) vom Pfeil getroffen ist oder durch ein anderes Mittel als die Pfeile Druck ausgeübt wird, umfasst,
wobei das Ziel (TG) in mehrere Flächen (401, 402, 403, 404, 405, 406, 407) unterteilt ist, von welchen jeder ein Indikator zugeordnet ist, wobei die Pfeile von mehreren Spielern der Reihe nach geworfen werden und ein Spiel nach Indikatoren der Flächen, die von den Pfeilen getroffen wurden, verläuft.

2. Spielvorrichtung nach Anspruch 1, des Weiteren umfassend
ein Kommunikationsmittel (100) zum Senden der Häufigkeit und des Zeitintervalls des Drucks auf dem Ziel (TG) und der Beurteilung des Handdruck-Beurteilungsmittels.

3. Spielvorrichtung nach Anspruch 1 oder 2, des Weiteren umfassend
ein Kommunikationsmittel (100) zum Senden einer ID eines Verwalters der Spielvorrichtung durch die Indikatoren, wenn Druck auf das Ziel (TG) unter einer ersten Bedingung ausgeübt wird, dass das Spiel nicht ausgeführt wird.

4. spielvorrichtung nach einem der Ansprüche 1 bis 3, des Weiteren umfassend
ein Kartenlesegerät (CD) zum Lesen von ID-Karten der Spieler und
ein Kommunikationsmittel (100) zum Durchführen einer Kommunikation, um eine Reihung der Spieler zu erhalten, wenn Druck auf das Ziel (TG) unter einer zweiten Bedingung ausgeübt wird, dass das Spiel nicht ausgeführt wird.

5. Spielvorrichtung nach einem der Ansprüche 1 bis 4, wobei das Spiel durch eine vorbestimmte Anzahl von Pfeilwürfen jedes Spielers verläuft, des Weiteren umfassend:
ein Punkte-Anzeigemittel zum Anzeigen von Punkten der Spieler auf dem Anzeigemonitor (312) entsprechend Indikatoren, die den Flächen entsprechen, die von den Pfeilen getroffen wurden, und
ein Helligkeitseinstellungsmittel, zum Erhellen der Punkteanzeige beim. ersten Wurf der vorgegebenen Wurfanzahl, zum Verdunkeln der Punkteanzeige nach dem ersten Wurf und zum erneuten Erhellen nach der vorgegebenen Wurfanzahl.

6. Spielsystem, umfassend eine Spielvorrichtung und einen Server (Sv), wobei die Spielvorrichtung umfasst:
Pfeile,
ein Ziel (TG),
einen Sensor (101) zum Erfassen einer Fläche des Ziels (TG), wo Druck ausgeübt wird, wenn der Druck ausgeübt wird,
eine Steuereinheit (100), in die ein Erfassungsergebnis des Sensors (101) eingegeben wird,
einen Anzeigemonitor (312), der von der Steuereinheit (100) gesteuert wird,
ein Kartenlesegerät (CD) zum Lesen von ID-Karten von Spielern,
**dadurch gekennzeichnet, dass**:
die Spielvorrichtung des Weiteren ein Handdruck-Beurteilungsmittel zum Beurteilen entsprechend der Zeitdauer des Drucks, ob das ziel (TG) vom Pfeil getroffen ist oder durch ein anderes Mittel als die Pfeile Druck ausgeübt wird, umfasst, und
ein Kommunikationsmittel (100) zum Senden der Häufigkeit und des Zeitintervalls des Drucks auf dem ziel (TG) und der Beurteilung des Handdruck-Beurteilungsmittels,
wobei das Ziel (TG) in mehrere Flächen (401, 402, 403, 404, 405, 406, 407) unterteilt ist, von welchen jeder ein Indikator zugeordnet ist, wobei die Pfeile von den mehreren Spielern der Reihe nach geworfen werden und ein Spiel nach Indikatoren der Flächen, die von den Pfeilen getroffen wurden, verläuft und
der Server (SV) umfasst:
ein Spielerinformationssteuermittel zum Steuern von Informationen der ID-Karten und einer Leistung entsprechend den ID-Karten und
ein Gültiger-Pfeilwurf-Beurteilungsmittel zum Beurteilen anhand der Häufigkeit und des Zeitintervalls des Drucks auf dem Ziel (TG) und der Beurteilung des Handdruck-Beurteilungsmittels, die vom Kommunikationsmittel (100) gesendet werden, ob der Pfeilwurf gültig ist oder nicht.

7. Spielsystem nach Anspruch 6, wobei das Gültiger-Pfeilwurf-Beurteilungsmittel erste und zweite Bedingungen beurteilt, das heißt,
erste Bedingung: HD x PT > ND,
zweite Bedingung: HD x S x G x TD > TT,
wobei:
ND = Häufigkeit des Drucks auf dem Ziel (TG),
TT = Zeitdauer, die für den Druck mit der Häufigkeit ND notwendig ist,
HD = häufigkeit von den ND-mal, dass das Handdruck-Beurteilungsmittel beurteilt, dass auf das Ziel (TG) durch ein anderes Mittel als die Pfeile Druck ausgeübt wird,
PT: ein Schwellenwert des Handdruck-Verhältnisses (HD/ND)
TD: ein Schwellenwert des Zeitintervalls des Pfeilwurfs,
S: ein Koeffizient, der sich auf Einzelspiele oder Doppelspiele bezieht, und S = 1 bei Einzel und S = 2 bei Doppel, und
G = Anzahl von Gruppen,
so dass beurteilt wird, dass der Pfeilwurf ungültig ist, wenn entweder die erste oder die zweite Bedingung erfüllt ist.

8. Spielprogramm, enthaltend Programmcodes, die von einem Computer ausführbar sind, für eine Spielvorrichtung, die Pfeile, ein Ziel (TG), einen Sensor (101) zum Erfassen einer Fläche des Ziels (TG), wo Druck ausgeübt wird, wenn der Druck ausgeübt wird, eine Steuereinheit (100), in die ein Erfassungsergebnis des Sensors (101) eingegeben wird, und einen Anzeigemonitor (312), der von der Steuereinheit (100) gesteuert wird, umfasst,
wobei das Ziel (TG) in mehrere Flächen (401, 402, 403, 404, 405, 406, 407) unterteilt ist, von welchen jeder ein Indikator zugeordnet ist, wobei die Pfeile von mehreren Spielern der Reihe nach geworfen werden und ein spiel nach Indikatoren der Flächen, die von den Pfeilen getroffen wurden, verläuft,
**dadurch gekennzeichnet, dass**:
die Programmcodes umfassen,
einen Handdruck-Beurteilungsschritt zum Beurteilen entsprechend der Zeitdauer des Drucks auf dem ziel (TG), ob das Ziel (TG) vom Pfeil getroffen ist oder durch ein anderes Mittel als die Pfeile Druck ausgeübt wird,
einen Schritt zum Beurteilten einer ersten Bedingung, das heißt,
erste Bedingung HD x PT > ND,
wobei:
ND = Häufigkeit des Drucks auf dem Ziel (TG),
TT = Zeitdauer, die für den Druck mit der Häufigkeit ND notwendig ist,
HD = Häufigkeit von den ND-mal, dass das Handdruck-Beurteilungsmittel beurteilt, dass auf das Ziel (TG) durch ein anderes Mittel als die Pfeile Druck ausgeübt wird,
PT: ein Schwellenwert des Handdruck-Verhältnisses (HD/ND)
TD: ein Schwellenwert des Zeitintervalls des Pfeilwurfs,
S: ein Koeffizient, der sich auf Einzelspiele oder boppelspiele bazieht, und S = 1 bei Einzel und S = 2 bei Doppel, und
G = Anzahl von Gruppen,
einen Schritt zum Beurteilen einer zweiten Bedingung, das heißt,
zweite Bedingung: HD x S x G x TD > TT, und
einen Beurteilungsschritt, dass der Pfeilwurf ungültig ist, wenn entweder die erste oder zweite Bedingung erfüllt ist, andernfalls gültig ist.

9. Speichermedium, das von einem Computer lesbar ist, das das Programm nach Anspruch 8 speichert.

## Revendications

1. Machine de jeu, comportant
des fléchettes,
une cible (TG),
un capteur (101) pour détecter une zone de ladite cible (TG) où une sollicitation est exercée quand ladite sollicitation est exercée,
une unité de commande (100) à laquelle est appliqué un résultat de détection par ledit capteur (101), et
un écran d'affichage (312) commandé par ladite unité de commande (100),
**caractérisée en ce que** :
la machine de jeu comporte en outre un moyen de jugement de sollicitation manuelle pour juger si, oui ou non, ladite cible (TG) est frappée par ladite fléchette ou sollicitée par d'autres moyens que lesdites fléchettes, en fonction de la durée de ladite sollicitation,
ladite cible (TG) étant divisée en une pluralité de zones (401, 402, 403, 404, 405, 406, 407) à chacune desquelles est attribué un repère, lesdites fléchettes étant lancées successivement par une pluralité de joueurs, et une partie se déroulant en fonction de repères desdites zones frappées par lesdites fléchettes.

2. Machine de jeu selon la revendication 1, comportant en outre
un moyen de communication (100) pour transmettre le nombre et la périodicité desdites sollicitations de ladite cible (TG) et le jugement dudit moyen de jugement de sollicitation manuelle.

3. Machine de jeu selon la revendication 1 ou 2, comportant en outre
un moyen de communication (100) pour transmettre un identifiant d'un gestionnaire de ladite machine de jeu quand une sollicitation est exercée sur ladite cible (TG) à la 1^{ère} condition que ladite partie ne soit pas exécutée.

4. Machine de jeu selon l'une quelconque des revendications 1 à 3, comportant en outre
un lecteur (CD) de cartes pour lire des cartes d'identification de joueurs, et
un moyen de communication (100) pour exécuter une communication afin d'obtenir un classement desdits joueurs quand une sollicitation est exercée sur ladite cible (TG) à la 2^{ème} condition que la partie ne soit pas exécutée.

5. Machine de jeu selon l'une quelconque des revendications 1 à 4, dans laquelle ladite partie se déroule en fonction de nombres prédéterminés de lancers de fléchettes effectués par chaque dit joueur, comportant en outre
un moyen d'affichage de points pour afficher, sur ledit écran d'affichage (312), des points marqués par lesdits joueurs en fonction de repères correspondant auxdites zones frappées par lesdites fléchettes, et
un moyen de réglage de luminosité pour éclaircir ledit affichage de points au moment du premier lancer parmi un nombre de lancers prédéterminé, assombrir ledit affichage de points après ledit premier lancer et de nouveau éclaircir ledit affichage de points après ledit nombre de lancers prédéterminé.

6. Système de jeu comportant une machine de jeu et un serveur (SV),
ladite machine de jeu comportant
des fléchettes,
une cible (TG),
un capteur (101) pour détecter une zone de ladite cible (TG) où une sollicitation est exercée quand ladite sollicitation est exercée,
une unité de commande (100) à laquelle est appliqué un résultat de détection par ledit capteur (101),
un écran d'affichage (312) commandé par ladite unité de commande (100), et
un lecteur (CD) de cartes pour lire des cartes d'identification de joueurs
**caractérisé en ce que** :
la machine de jeu comporte en outre un moyen de jugement de sollicitation manuelle pour juger si, oui ou non, ladite cible (TG) est frappée par ladite fléchette ou sollicitée par d'autres moyens que lesdites fléchettes en fonction de la durée de ladite sollicitation, et
un moyen de communication (100) pour transmettre le nombre et la périodicité desdites sollicitations de ladite cible (TG) et le jugement dudit moyen de jugement de sollicitation manuelle,
ladite cible (TG) étant divisée en une pluralité de zones (401, 402, 403, 404, 405, 406, 407) à chacune desquelles est attribué un repère, lesdites fléchettes étant lancées successivement par ladite pluralité de joueurs, et une partie se déroulant en fonction de repères desdites zones frappées par lesdites fléchettes, et
ledit serveur (SV) comprend
un moyen de commande d'informations sur les joueurs pour commander les informations desdites cartes d'identification et la réussite correspondant auxdites cartes d'identifcation, et
un moyen de jugement de validité de lancer de fléchette pour juger si, oui ou non, ledit lancer de fléchette est valable en fonction dudit nombre de sollicitations et de ladite périodicité des sollicitations de ladite cible (TG) et dudit jugement desdits moyens de jugement de sollicitation manuelle, qui sont transmis par ledit moyen de communication (100).

7. Système de jeu selon la revendication 6, dans lequel ledit moyen de jugement de validité de lancer de fléchette juge la 1^{ère} et la 2^{ème} conditions, à savoir
1^{ère} conditon : HDxPT>ND,
2^{ème} condition : HDxSxGxTD>TT,
où
ND est le nombre de dites sollicitations de ladite cible (TG),
TT est le laps de temps nécessaire pour ledit nombre ND de sollicitations, HD est le nombre de fois, parmi ND fois, où ledit moyen de jugement de sollicitation manuelle juge que ladite cible (TG) est sollicitée par d'autres moyens que lesdites fléchettes,
PT est un seuil de rapport (HD/ND) de sollicitations manuelles,
S est un coefficient concernant une partie simple ou une partie double, et S=1 en cas de partie simple et S=2 s'il s'agit d'une partie double, et
G est le nombre de groupes,
de manière à juger que ledit lancer de fléchettes est non valable quand la 1^{ère} ou la 2^{ème} condition est satisfaite.

8. Programme de jeu comprenant des codes de programme exécutables par un ordinateur, pour une machine de jeu comportant des fléchettes, une cible (TG), un capteur (101) pour détecter une zone de ladite cible (TG) où une sollicitation est exercée quand ladite Sollicitation est exercée, une unité de commande (100) à laquelle est appliqué un résultat de détection par ledit capteur (101), et un écran d'affichage (312) commandé par ladite unité de commande (100), ladite cible (TG) étant divisée en une pluralité de zones (401, 402, 403, 404, 405, 406, 407) à chacune desquelles est attribué un repère, lesdites fléchettes étant lancées successivement par une pluralité de joueurs, et une partie se déroulant en fonction de repères desdites zones frappées par lesdites fléchettes,
**caractérisé en ce que** :
lesdits codes de programme comprennent
une étape de jugement de sollicitation manuelle pour juger en fonction de la durée de ladite sollicitation de ladite cible (TG) si, oui ou non, ladite cible (TG) est frappée par ladite fléchette ou sollicitée par d'autres moyens que lesdites fléchettes,
une étape pour juger une première condition, à savoir
1^{ère} condition : HDxPT>ND,
où
ND est le nombre de dites sollicitations de ladite cible (TG),
TT est le laps de temps nécessaire pour ledit nombre ND de sollicitations,
HD est le nombre de fois, parmi ND fois, où ledit moyen de jugement de sollicitation manuelle juge que ladite cible (TG) est sollicitée par d'autres moyens que lesdites fléchettes,
PT est un seuil de rapport (HD(ND) de sollicitations manuelles,
S est un coefficient concernant une partie simple ou une partie double, et S=1 en cas de partie simple et S=2 s'il s'agit d'une partie double, et
G est le nombre de groupes,
une étape pour juger une deuxième condition, à savoir
2^{ème} condition : HDxSxGxTD>TT, et
une étape de jugement pour juger que ledit lancer de fléchettes est non valable quand la 1^{ère} ou la 2^{ème} condition est satisfaite ou, sinon, est valable.

9. Support de mémoire, exploitable par un ordinateur, qui contient ledit programme selon la revendication S.
